# EUROPÄISCHE PATENTSCHRIFT

(11) **EP 1 018 418 B1**
(45) Veröffentlichungstag und Bekanntmachung des Hinweises auf die Patenterteilung: **13.10.2004**
(21) Anmeldenummer: 00100062.9
(22) Anmeldetag: 05.01.2000
(51) Int. Cl.: B29C 43/24

(54) **Verfahren zur Herstellung einer Elastomerträgerbahn**
Method for the production of elastomeric conveyor belt
Procédé pour la fabrication d'une bande transporteuse en élastomère

(30) Priorität: 07.01.1999 DE 19900183
(43) Veröffentlichungstag der Anmeldung: 12.07.2000
(73) Patentinhaber: tesa AG, 20253 Hamburg (DE)
(72) Erfinder: Neuhaus-Steinmetz, Hermann, 22926 Ahrensburg (DE); Stähr, Jochen, 30179 Hannover (DE); Schümann, Uwe, Dr., 25421 Pinneberg (DE); Burmeister, Axel, 21244 Buchholz i.d.N. (DE)

(56) Entgegenhaltungen:
- EP-A- 0 335 152
- EP-A- 0 799 686
- US-A- 4 306 927
- US-A- 5 281 373
- US-A- 5 397 611
- US-A- 5 783 272
- PATENT ABSTRACTS OF JAPAN vol. 013, no. 013 (M-783), 12. Januar 1989 (1989-01-12) & JP 63 224913 A (JIRO HORIKAWA), 20. September 1988 (1988-09-20)
- PATENT ABSTRACTS OF JAPAN vol. 013, no. 013 (M-783), 12. Januar 1989 (1989-01-12) & JP 63 224914 A (JIRO HORIKAWA), 20. September 1988 (1988-09-20)
- PATENT ABSTRACTS OF JAPAN vol. 1999, no. 09, 30. Juli 1999 (1999-07-30) & JP 11 090949 A (SHINKO KASEI KK), 6. April 1999 (1999-04-06)
- PATENT ABSTRACTS OF JAPAN vol. 017, no. 275 (M-1418), 27. Mai 1993 (1993-05-27) & JP 05 008242 A (BANDO CHEM IND LTD), 19. Januar 1993 (1993-01-19)

## Beschreibung

Die Erfindung betrifft ein Verfahren zur Herstellung einer Elastomerträgerbahn.

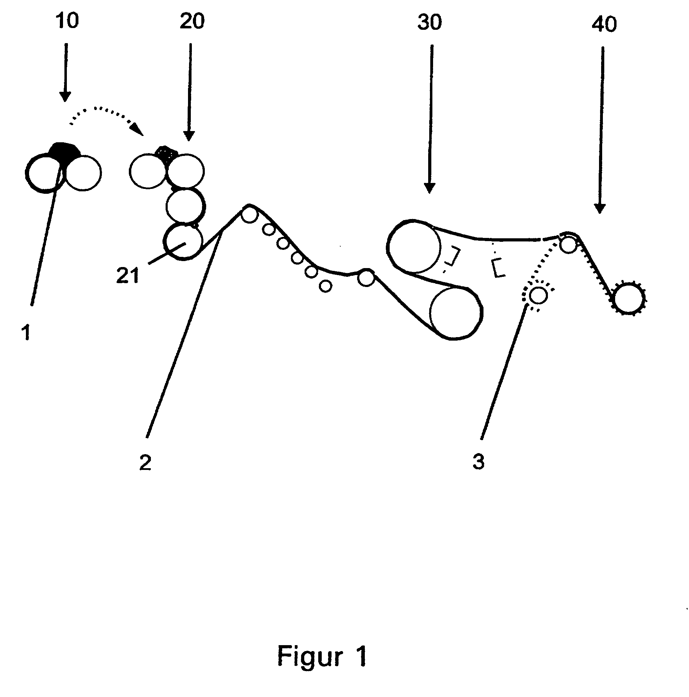

Die aus dem Stand der Technik bekannten Verfahren zur Herstellung einer Elastomerträgerbahn umfassen zumeist einen herkömmlichen Kalanderprozeß, bei dem eine Polymermischung aus einem Innenmischer entweder über ein Brecherwalzwerk mit Förderband oder einen Förderextruder an einen Kalander geführt wird.
In diesem wird mit hohem Eintrag von Energie (mechanisch und thermisch) eine endlose, gleichförmige Polymerbahn erzeugt. Diese Polymerbahn wird von der letzten formenden Walze mittels einer oder zweier getriebener Wellen abgezogen, über Kühlwalzen und/oder ein Kühlband zur Aufwickelung geführt.
In der Aufwickelstation wird die Polymerbahn mit einem Trennmittel versehen, sei es ein Pulver oder ein bahnförmiger Zwischenträger mit guten Releaseeigenschaften wie zum Beispiel einer PE-Folie. Abschließend erfolgt die Wickelung zu einem Ballen.
Eine graphische Darstellung des bekannten Verfahrens zeigt die Figur 1.

Danach wird die in einem nicht näher dargestellten Mischer hergestellte Polymermischung 1 über das Walzwerk 10 einem aus vier Walzen gebildeten Kalander 20 zugeführt, in dem die Polymermischung 1 zu einer Bahn 2 ausgeformt wird. Die Bahn 2 wird über weitere Walzen in die Kühlstation 30 gegeben. Vor der Wickelstation 40 wird der Hilfsträger 3 auf die Bahn 1 gelegt.

Dieses Verfahren hat sich für klassische Polymermischungen bewährt.

Allerdings versagt das oben beschriebene Verfahren prinzipbedingt beim Ausformen von Polymermischungen mit starker Eigenklebrigkeit und/oder mit geringer Festigkeit im unvernetzten Zustand, und zwar weil sich die Polymerbahn nicht ohne Bahnriß oder nur mit sehr starker Reckung von der letzten formgebenden Walze abziehen läßt.

Für Mischungen mit starker Eigenklebrigkeit und/oder mit geringer Festigkeit im unvernetzten Zustand ist daher bisher nur eine Beschichtung mittels Düse möglich.

Aufgabe der Erfindung ist es, ein Verfahren zur Verfügung zu stellen, welches es ermöglicht, Polymermischungen mit hoher Eigenklebrigkeit und/oder geringer Festigkeit auf herkömmlichen Kalandern ohne Verlust der Effizienz oder der Produktqualität und ohne zusätzliche aufwendige Modifikationen zu verarbeiten.

Gelöst wird diese Aufgabe durch ein Verfahren, wie es im Hauptanspruch niedergelegt ist. Vorteilhafte Ausführungsformen desselben sind Gegenstand der Unteransprüche.

Demgemäß betrifft die Erfindung ein Verfahren zur Herstellung einer Elastomerträgerbahn, enthaltend die folgenden Verfahrensschritte:
a) Aufgabe einer Polymermischung insbesondere in einen Mischer,
b) Förderung der vorkonfektionierten Polymermischung an einen aus mindestens aus zwei Walzen bestehenden Kalander,
c) Ausformen der Polymermischung im Kalander zu einer Bahn,
d) Applizierung eines bahnförmigen Hilfsträgers mittels einer Andruckwalze, die mit der letzten formgebenden Kalanderwalze in Kontakt steht, zur Aufnahme der Bahn und
e) gegebenenfalls Abkühlung, Vernetzung und/oder Aufwicklung der auf dem Hilfsträger befindlichen Bahn.

Der Hilfsträger kann die auftretenden Abzugsspannungen an der Kalanderwalze gänzlich auffangen, so daß es zu keinerlei Beanspruchung des eigentlichen Produktes kommt. In einer bevorzugten Ausführungsform besteht der Hilfsträger aus handelsüblichen Folien, Papieren oder Geweben, gegebenenfalls mit auf das Produkt abgestimmten Releaseeigenschaften, so daß er bei der Weiterverarbeitung problemlos wieder entfernt werden kann.

Der Hilfsträger kann darüber hinaus zum Aufbau von Mehrschichtsystemen verwendet werden, indem er auf herkömmlichen Beschichtungsanlagen mit einer oder mehreren Schichten ausgerüstet wird. Diese Schichten können zum Beispiel Farb-, Sperr-, Primerund/oder Klebeschichten sein.

Das erfindungsgemäße Verfahren bietet auch die Möglichkeit, durch beidseitige Ausrüstung des Hilfsträgers die Polymerbahn beidseitig mit einer oder mehren Schichten auszurüsten. Gegebenenfalls muß hierzu der Hilfsträger mit einer zusätzlichen Trennfolie ausgerüstet werden, um ein Verblocken der Schichten zu vermeiden. Die Hilfsfolie sollte dann vor dem Applizieren an die Polymerbahn ausgedeckt werden.

Vorzugsweise wird die Polymermischung gewählt aus der Gruppe der Naturkautschuke, der Synthesekautschuke oder besteht diese aus einem Zweierblend aus Naturkautschuk/Synthesekautschuk oder zweier Synthesekautschuke.

Weiter vorzugsweise wird der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane gewählt.

Des weiteren kann die Polymermischung Zusatzstoffe wie Füllstoffe, Alterungsschutzmittel, Weichmacher und Klebharze enthalten.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im Handbook of Pressure Sensitive Adhesive Technology" von Donatas Satas (van Nostrand, 1989) sei ausdrücklich hingewiesen.

Als Weichmacher können alle aus der Klebebandtechnologie bekannten weichmachenden Substanzen eingesetzt werden. Dazu zählen unter anderem die paraffinischen und naphthenischen Öle, (funktionalisierte) Oligomere wie Oligobutadiene, -isoprene, flüssige Nitrilkautschuke, flüssige Terpenharze, pflanzliche und tierische Öle und Fette, Phthalate, funktionalisierte Acrylate.

Zum Zwecke der thermisch induzierten chemischen Vernetzung sind bei dem erfindungsgemäßen Verfahren alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.
Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.
Die thermische Anregung der Vemetzer kann auch durch IR-Strahlen oder hochenergetische Wechselfelder erfolgen. Die Vemetzung der Polymermischung kann weiterhin mittels einer Kombination von ionisierender Strahlung und chemischen Vemetzem erfolgen.

Die Dicke der Bahn nach dem Kalander beträgt insbesondere zwischen 100 µm bis 4000 µm, besonders 400 - 2500 µm. Der Hilfsträger weist insbesondere eine Dicke auf von 10 µm und 2000 µm, vorzugsweise zwischen 15 µm und 150 µm.

Besonders vorteilhaft läßt sich das Verfahren zur Herstellung einer Bahn aus einer Hotmelt-Klebemasse auf der Basis nicht-thermoplastischer Elastomere einsetzen.

Überraschenderweise konnte festgestellt werden, daß durch den Einsatz von Hilfsträgem eine hohe Verbundfestigkeit bei Mehrlagensystemen ohne zusätzlichen Verarbeitungsschritt und eine ungewöhnlich gute Dickenkonstanz erreicht werden kann, welche durch konventionelle Ausformung mit den beschriebenen Polymermischungen nicht zu erzielen ist.

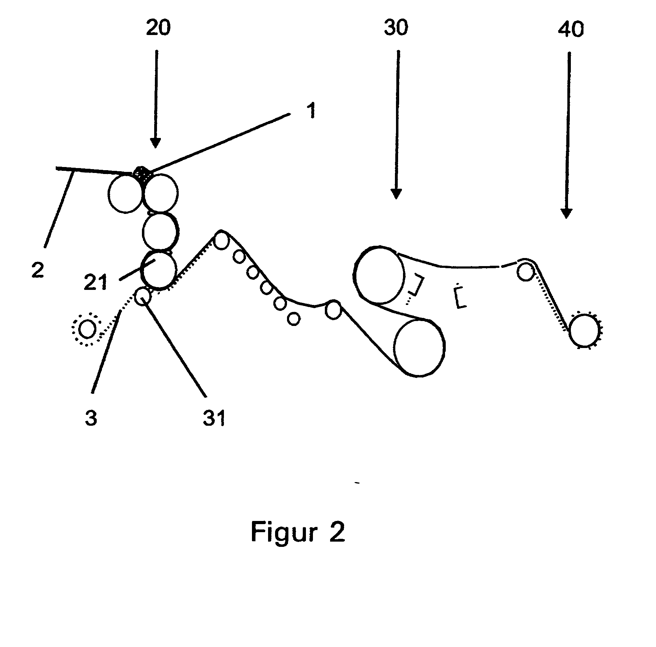

Im folgenden soll das erfindungsgemäße Verfahren mittels einer weiteren Figur sowie anhand mehrerer Beispiele näher erläutert werden, ohne damit die Erfindung unnötig einschränken zu wollen. Es zeigt die
- Figur 2: den Weg der Polymermischung vom Kalander zur Wickelstation.

### Beispiel 1

In einem wiederum nicht näher erläuterten Mischer wird eine Polymermischung gemäß folgender Rezeptur hergestellt:

| | Dichte [g/cm3] | Anteil [phr] |
|---|---|---|
| CV 50 | 0.92 | 100.0 |
| Russ N 772 | 1.80 | 9.8 |
| Schlämmkreide | 2.70 | 26.4 |
| ASM | 1.00 | 2.0 |
| X6 | 1.00 | |
| | | |
| Summe Compound | | 138.2 |

Diese vorkonfektionierte Polymermischung 1 wird einer Kalanderstation 20 mit vier Walzen zugeführt. In der Kalanderstation 20 wird die Polymermischung 1 zu einer Bahn 2 ausgeformt. Mittels einer Andruckwalze 31 an der letzten formgebenden Kalanderwalze 21 wird ein bahnförmiger Hilfsträger 3 appliziert, der zur Aufnahme der Bahn 2 dient.

Die Bahn 2 wird mitsamt des Hilfsträgers über weitere Walzen in die Kühlstation 30 gegeben. Nach dem Kühlvorgang erfolgt in der Wickelstation 40 das Aufwickeln von Bahn 2 mit Hilfsträger 3.
Der Hilfsträger wird hierbei von einer einfachen Folie aus PE gebildet.

### Beispiel 2

Der Fertigungsprozeß der Polymermischung entspricht demjenigen aus Beispiel 1, auch weist das Verfahren die identischen Anlagenteile auf.

In dieser alternativen Ausführungsform wird der Hilfsträger aus Folie vor dem Antragen an die Bahn mit einem Sperrstrich und darauf mit einem Primer in herkömmlichen Beschichtungsstationen versehen.

### Beispiel 3

Der Fertigungsprozeß der Polymermischung entspricht demjenigen aus Beispiel 1, auch weist das Verfahren die identischen Anlagenteile auf.

In dieser weiteren alternativen Ausführungsform wird der Hilfsträger aus Folie vor dem Antragen an die Bahn beidseitig mit einem Sperrstrich und darauf jeweils mit einem Primer in herkömmlichen Beschichtungsstationen versehen.

### Beispiel 4

Der Fertigungsprozeß der Polymermischung entspricht demjenigen aus Beispiel 1, auch weist das Verfahren die identischen Anlagenteile auf.

In dieser weiteren alternativen Ausführungsform wird der Hilfsträger aus Trennpapier vor dem Antragen an die Bahn einseitig mit einer Selbstklebemasse versehen, welche ggf. auch mit einer Sperr- und/ oder Primerschicht versehen sein kann.

## Patentansprüche

1. Verfahren zur Herstellung einer Elastomerträgerbahn (2), enthaltend die folgenden Verfahrensschritte:
a) Aufgabe einer Polymermischung (1) insbesondere in einen Mischer,
b) Förderung der vorkonfektionierten Polymermischung an einen aus mindestens aus zwei Walzen bestehenden Kalander (20);
c) Ausformen der Polymermischung im Kalander zu einer Bahn,
d) Applizierung eines bahnförmigen Hilfsträgers (30) mittels einer Andruckwalze (31), die mit der letzten formgebenden Kalanderwalze in Kontakt steht, zur Aufnahme der Bahn und
e) gegebenenfalls Abkühlung, Vernetzung und/oder Aufwicklung der auf dem Hilfsträger befindlichen Bahn.

2. Verfahren nach Anspruch 1, **dadurch gekennzeichnet, daß** der Hilfsträger aus Folien, Papieren oder Geweben besteht.

3. Verfahren nach Anspruch 1, **dadurch gekennzeichnet, daß** der Hilfsträger vor Applizierung an der Bahn mit einer oder mehreren Schichten ausgerüstet wird.

4. Verfahren nach Anspruch 1, **dadurch gekennzeichnet, daß** die Polymermischung gewählt ist aus der Gruppe der Naturkautschuke, der Synthesekautschuke oder daß diese besteht aus einem Zweierblend aus Naturkautschuk/Synthesekautschuk oder zweier Synthesekautschuke.

5. Verfahren nach Anspruch 1, **dadurch gekennzeichnet, daß** der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane gewählt sind.

6. Verfahren nach Anspruch 1, **dadurch gekennzeichnet, daß** die Polymermischung Zusatzstoffe wie Füllstoffe, Alterungsschutzmittel, Weichmacher und Klebharze enthält.

7. Verfahren nach Anspruch 1, **dadurch gekennzeichnet, daß** die Dicke der Bahn nach dem Kalander zwischen 100 µm und 4000 µm, vorzugsweise zwischen 400 µm und 2500 µm beträgt.

8. Verfahren nach Anspruch 1, **dadurch gekennzeichnet, daß** der Hilfsträger eine Dicke aufweist von 10 µm bis 2000 µm, besonders 15 bis 150 µm.

9. Verfahren nach Anspruch 1 zur Herstellung einer Bahn aus einer Hotmelt-Klebemasse auf der Basis nicht-thermoplastischer Elastomere.

## Claims

1. Process for producing an elastomer substrate web (2), comprising the following process steps:
a) feeding in a polymer mixture (1), in particular into a mixer,
b) conveying the ready-prepared polymer mixture to a calender (20), comprising at least two rollers,
c) forming the polymer mixture out in the calender into a web,
d) applying an auxiliary substrate (30) in web form by means of a pressure-exerting roller (31), which is in contact with the last forming calender roller, for receiving the web, and
e) if appropriate, cooling, crosslinking and/or winding up the web located on the auxiliary substrate.

2. Process according to Claim 1, **characterized in that** the auxiliary substrate comprises films, papers or woven fabrics.

3. Process according to Claim 1, **characterized in that** the auxiliary substrate is provided with one or more layers before application to the web.

4. Process according to Claim 1, **characterized in that** the polymer mixture is chosen from the group of natural rubbers or synthetic rubbers or it comprises a two-component blend of natural rubber/synthetic rubber or two synthetic rubbers.

5. Process according to Claim 1, **characterized in that** the synthetic rubber or the synthetic rubbers are chosen from the group of randomly copolymerized styrene-butadiene rubbers (SBR), butadiene rubbers (BR), synthetic polyisoprenes (IR), butyl rubbers (IIR), halogenated butyl rubbers (XIIR), polyacrylate rubbers (ACM), ethylene-vinyl acetate copolymers (EVA) and polyurethanes.

6. Process according to Claim 1, **characterized in that** the polymer mixture contains additives such as fillers, antioxidants, plasticizers and adhesive resins.

7. Process according to Claim 1, **characterized in that** the thickness of the web downstream of the calender is between 100 µm and 4000 µm, preferably between 400 µm and 2500 µm.

8. Process according to Claim 1, **characterized in that** the auxiliary substrate has a thickness of 10 µm to 2000 µm, in particular 15 to 150 µm.

9. Process according to Claim 1 for producing a web from a hot-melt adhesive compound on the basis of non-thermoplastic elastomers.

## Revendications

1. Procédé pour la fabrication d'une bande support en élastomère (2) présentant les étapes de procédé suivantes :
a) introduction d'un mélange de polymères (1), en particulier dans un mélangeur,
b) transport du mélange de polymères préconfectionné vers une calandreuse (20) constituée par au moins deux cylindres,
c) façonnage du mélange de polymères dans la calandreuse en une bande,
d) application d'un support auxiliaire (30), destiné à recevoir la bande, en forme de bande au moyen d'un cylindre de compression (31) qui est en contact avec le dernier cylindre de façonnage de la calandreuse et
e) le cas échéant refroidissement, réticulation et/ou enroulement de la bande se trouvant sur le support auxiliaire.

2. Procédé selon la revendication 1, **caractérisé en ce que** le support auxiliaire est constitué par des feuilles, des papiers ou des tissus.

3. Procédé selon la revendication 1, **caractérisé en ce que** le support auxiliaire est pourvu d'une ou de plusieurs couches avant l'application sur la bande.

4. Procédé selon la revendication 1, **caractérisé en ce que** le mélange de polymères est choisi dans le groupe des caoutchoucs naturels, des caoutchoucs de synthèse, ou il est constitué d'un mélange binaire de caoutchouc naturel/caoutchouc de synthèse ou de deux caoutchoucs de synthèse.

5. Procédé selon la revendication 1, **caractérisé en ce que** le caoutchouc de synthèse ou les caoutchoucs de synthèse sont de préférence choisis dans le groupe des caoutchoucs de styrène-butadiène (SBR) copolymérisés statistiques, des caoutchoucs de butadiène (BR), des polyisoprènes synthétiques (IR), des caoutchoucs de butyle (IIR), des caoutchoucs de butyle halogénés (XIIR), des caoutchoucs d'acrylate (ACM), des copolymères d'éthylène-acétate de vinyle (EVA) et des polyuréthannes.

6. Procédé selon la revendication 1, **caractérisé en ce que** le mélange de polymères contient des additifs, tels que des charges, des agents de protection contre le vieillissement, des plastifiants et des résines adhésives.

7. Procédé selon la revendication 1, **caractérisé en ce que** l'épaisseur de la bande après la calandreuse est située entre 100 µm et 4000 µm, de préférence entre 400 µm et 2500 µm.

8. Procédé selon la revendication 1, **caractérisé en ce que** le support auxiliaire présente une épaisseur de 10 µm à 2000 µm, en particulier de 15 à 150 µm.

9. Procédé selon la revendication 1 pour fabriquer une bande à partir d'une masse adhésive fondue à chaud à base d'élastomères non thermoplastiques.
